# EUROPEAN PATENT APPLICATION

(11) **EP 4 488 149 A1**
(43) Date of publication of application: **08.01.2025**
(21) Application number: 24179065.8
(22) Date of filing: 30.05.2024
(51) Int. Cl.: B62D 25/18

(54) **MUDGUARD FOR INDUSTRIAL VEHICLES, PROVIDED WITH ADJUSTABLE FIXING DEVICES**

(30) Priority: 03.07.2023 IT 202300013779
(71) Applicant: DOMAR S.p.A., 70022 Altamura, Bari (IT)
(72) Inventor: PASQUALE, Fiore, I-70022 Altamura, BARI (IT); REGINA, Giuseppe, I-70022 Altamura, BARI (IT); DAMBROSIO, Massimo, I-70022 Altamura, BARI (IT)
(74) Representative: Mitola, Marco

(57) **Abstract**

A mudguard (4) for vehicles (12), comprising a mudguard body (8), at least a pair of adjustable fixing devices (20), arranged on opposite sides of said centreline plane (M-M), each adjustable fixing device (20) having a base (24) provided with an interface wall (28) intended to abut against an outer side wall (32) of the mudguard body (8), opposite to said associable wheel, and an upper fixing wall (36), opposite to the interface wall (28) and intended to be fixed to a support bracket of the associable vehicle. A front recess (40) aligned with a slot (44) passing through the upper fixing wall (36) is provided at the upper fixing wall (36), said slot (44) housing a pin (48) for fixing the base (24) to the chassis. Said fixing pin (48) comprises a stem (52) integral with a square washer (54) sliding inside a housing (60) placed below said slot (44) and comprising a head (64) arranged on the opposite side of the stem (52) with respect to the square washer (54).

## Description

### FIELD OF APPLICATION

The present invention relates to a mudguard for industrial vehicles, provided with adjustable fixing devices.

### BACKGROUND ART

As is known, vehicles, in particular industrial vehicles, such as vans, trucks, lorries and heavy vehicles in general, are provided with large mudguards which need to be fixed to the chassis quickly and safely at the same time.

Mudguards are typically provided with supports which can comprise hollow tubular elements which are fitted on special support tubes fixed to the vehicle chassis. The mutual fixing is achieved with fixing means, such as screws, bolts, and/or snap fixing clips.

Moreover, there are solutions in which the mudguards must be fixed to brackets connected to the vehicle chassis and provided with flat surfaces, conventionally parallel to the ground. Said connections typically include using screws, bolts, washers, and the like.

The present invention relates in particular to the latter category of supports provided with brackets with related flat surfaces.

Such supports of the prior art have technical drawbacks.

In particular, they are not easy to fix to both the mudguard and the vehicle chassis; moreover, they are relatively costly and heavy to make.

Finally, the known solutions are not flexible and therefore require *ad hoc* embodiments for the various sizes of mudguard or types of brackets of the vehicle.

Therefore, on the one hand the solutions of the prior art are relatively expensive to make and assemble, and on the other hand, they are not very easy to mount.

### OVERVIEW OF THE INVENTION

Therefore, the need to solve the drawbacks and limitations mentioned with reference to the prior art is felt.

Such a need is met by a mudguard according to claim 1.

### DESCRIPTION OF THE DRAWINGS

Further features and advantages of the present invention will be more comprehensible from the following description of preferred, non-limiting embodiments thereof, in which:
Figures 1-2 show perspective views, from different angles, of a mudguard provided with adjustable fixing devices according to an embodiment of the present invention;
Figure 3 shows perspective views, from different angles and in different mounting configurations, of adjustable fixing devices according to possible embodiments of the present invention;
Figure 4 shows section views of the adjustable fixing devices in Figure 3;
Figure 5 shows a perspective view of an adjustable fixing device according to a further possible embodiment of the present invention;
Figure 6 shows a perspective view, in an assembled configuration, of a mudguard provided with adjustable fixing devices according to a further embodiment of the present invention;
Figure 7 shows a perspective view, in separate parts, of certain components of the mudguard in Figure 6;
Figure 8 shows a perspective view, in separate parts, of the detail VIII of Figure 7;
Figure 9 shows a section view, in an assembled configuration, of the mudguard provided with the adjustable fixing devices in Figure 6.

The elements or parts of elements common to the embodiments described below will be indicated by the same reference numerals.

### DETAILED DESCRIPTION

With reference to the aforesaid drawings, an overall diagrammatic view of a mudguard for vehicles, preferably industrial vehicles such as trucks, lorries, tractor-trailers, vans, trailers, and the like, is indicated as a whole by reference numeral 4.

For the purposes of the present invention, the type of mudguard 4 or even the type of vehicle 8 on which the latter is applied is negligible.

Mudguard 4 comprises a mudguard body 8 having an arc-of-a-circle extension from a front end 12 to a rear end 16 with respect to a centreline plane (M-M) passing through the rotation axis of an associable vehicle wheel (not shown).

Mudguard 4 further comprises at least a pair of adjustable fixing devices 20, arranged on opposite sides of said centreline plane M-M, preferably, but not necessarily, in a symmetric manner.

Each adjustable fixing device 20 has a base 24 provided with an interface wall 28 intended to abut against an outer side wall 32 of the mudguard body 8, opposite to said associable wheel, and an upper fixing wall 36, opposite to the interface wall 28 and intended to be fixed to a support bracket (not shown) of the associable vehicle.

A front recess 40 aligned with a slot 44 passing through the upper fixing wall 36 is provided at the upper fixing wall 36, said slot 44 housing a pin 48 for fixing the base 24 to the chassis of the associable vehicle.

Preferably, in a configuration of mounting the adjustable fixing device 20 to the mudguard body 8, said slot 44 extends along a transverse direction T-T, perpendicular to said centreline plane M-M.

Slot 44 serves the function of making the position or centre distance of the adjustable fixing device 20 adjustable, which can be set at different heights depending on the shape of the chassis of the associable vehicle.

The front recess 40 is useful to facilitate the insertion and sliding of the fixing pin 48 into the slot: the time for mounting the mudguard 4 to the vehicle chassis is thus speeded up; moreover, the use of tightening rings and corresponding support tubes is avoided, and the number of components required to mount the mudguard 4 is accordingly minimized.

Said fixing pin 48 comprises a typically threaded stem 52 integral with a square washer 54 sliding inside a housing 60 placed below said slot 44, and a head 64 arranged on the opposite side of the stem 52 with respect to the square washer 54. Head 64 can be arranged at most flush with said square washer 54, as better described below.

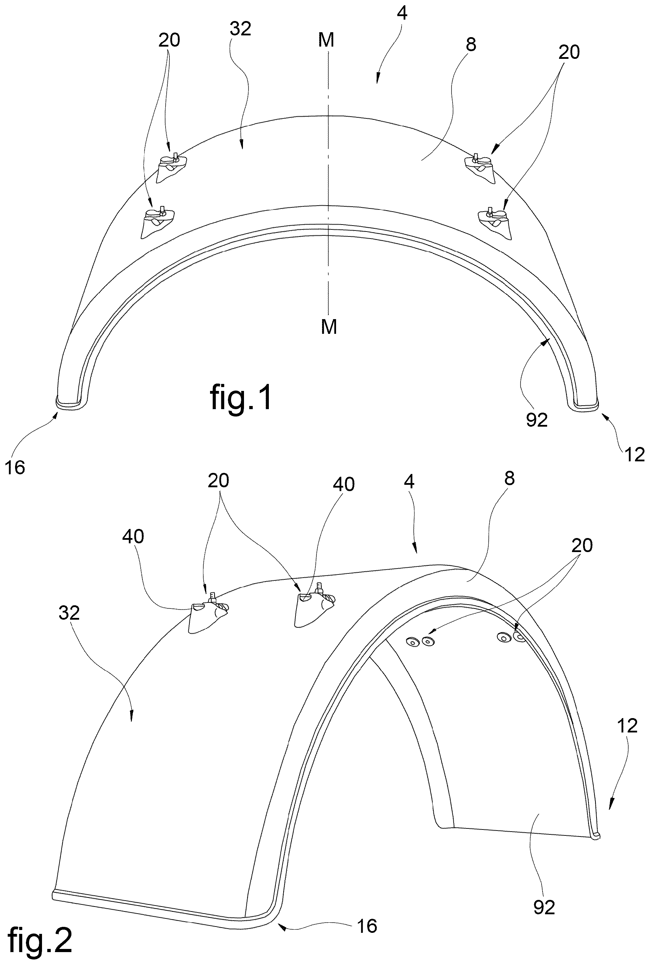

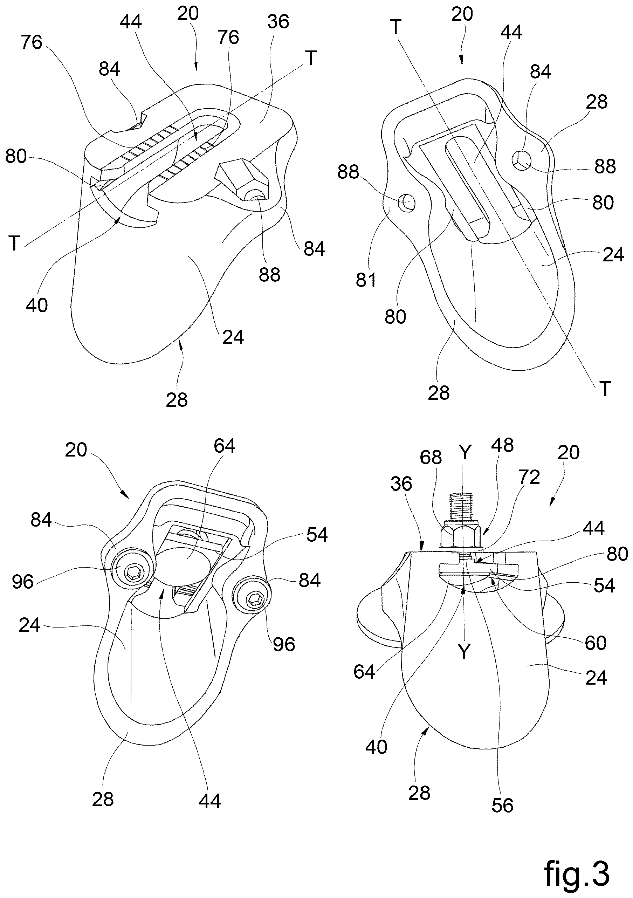

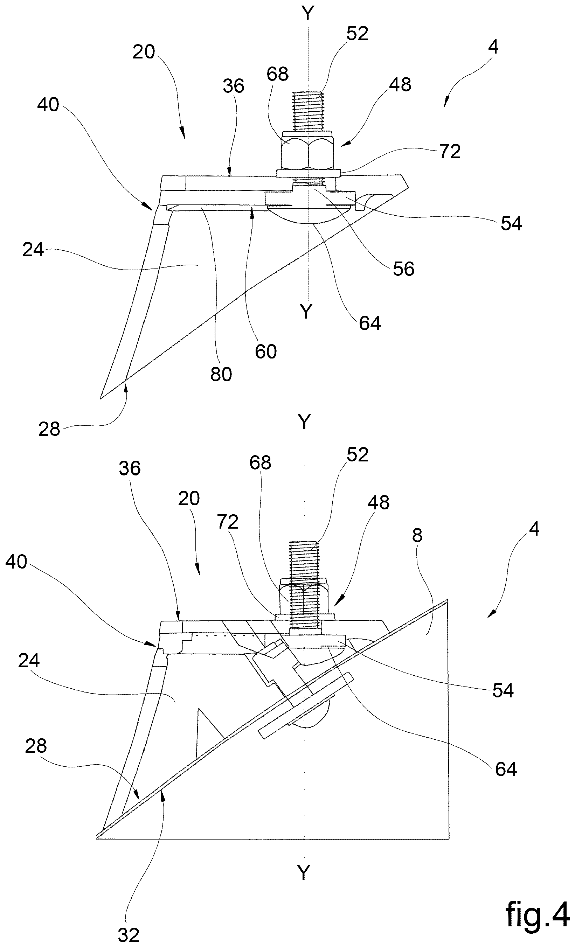

According to a possible embodiment (Figures 1-4), said stem 52 is in one piece with the square washer 54.

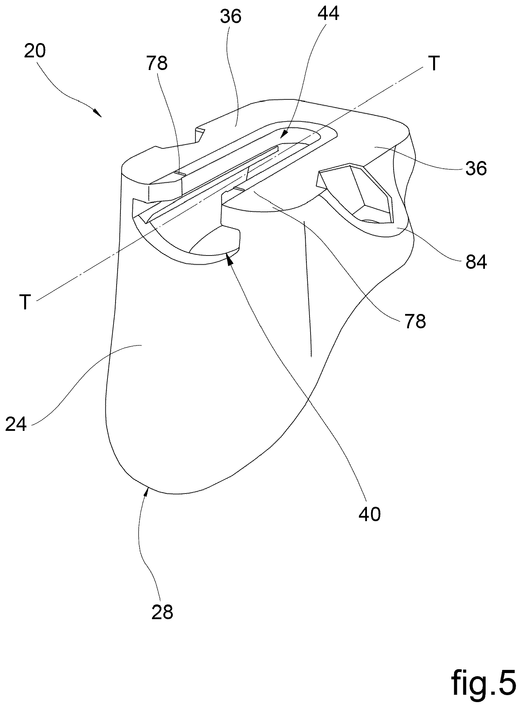

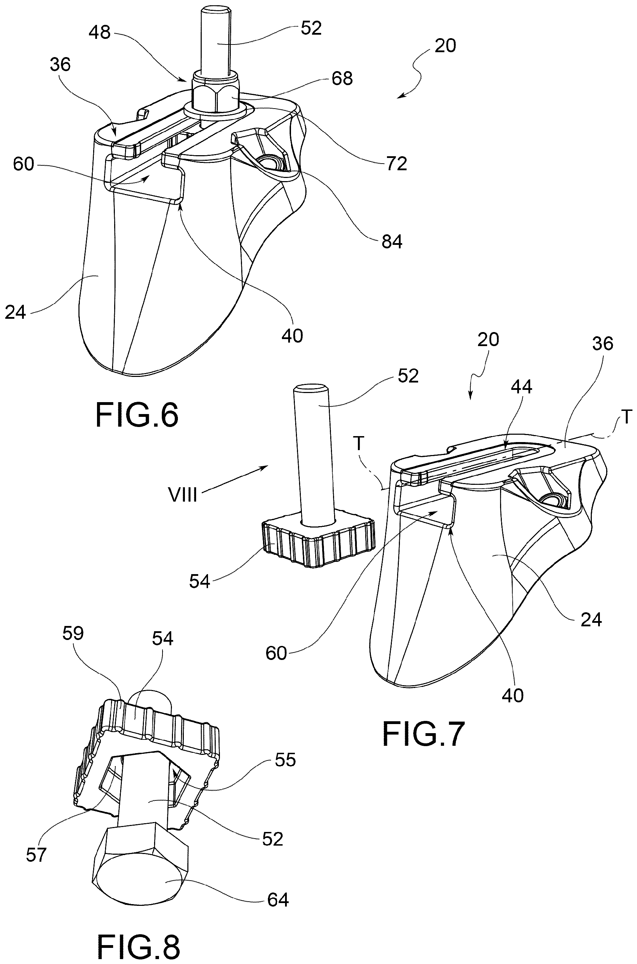

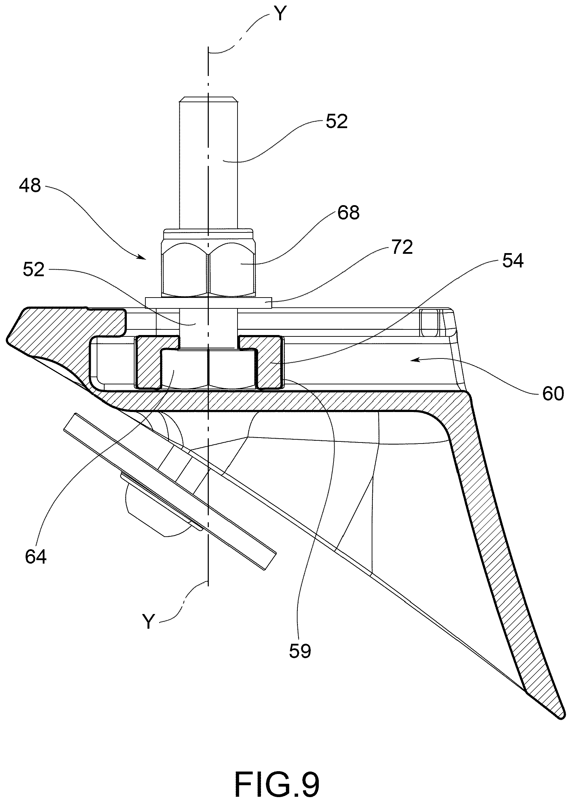

According to a possible embodiment (Figures 5-9), said stem 52 is rotationally integral with the square washer 54 by means of shape coupling between a blind seat 55 of the square washer 54 and the head 64 of the fixing pin 48.

For example, said blind seat 55 is delimited by an inner abutment 57 and in which the head 64 is flush with the square washer 54.

The front recess 40 intercepts said housing 60 and is dimensioned so as to allow the passage of the head 64 and/or the square washer 54 of the fixing pin.

According to a possible embodiment (Figures 1-4), the head 64 of the stem 52 of the fixing pin 48 is bulged and has a square under-head 56 which engages in said square washer 54, which in turn slides inside said housing 60 placed below slot 44.

Preferably, housing 60 is counter-shaped with respect to the square washer 54 so as to form a prismatic coupling with the latter allowing the axial guide or relative axial sliding between the slot 44 and the fixing pin 48.

According to a possible embodiment, the stem 52 of the fixing pin 48 is fixed to the upper fixing wall 36 by means of a nut 68, arranged on the opposite side of head 64, where a washer 72 is interposed between the nut 68 and the upper fixing wall 36.

Said washer is preferably made of PVC and is made in order to prevent the fixing pin 48 from sliding and falling when fixed to the chassis of the associable vehicle.

For example, said square washer 54 has, on an outer side wall, friction means 59 adapted to interface with said housing 60: said friction means 59 serve to stop the square washer 54 in place, along slot 44, before tightening nut 68. In other words, the friction means 59 facilitate the step of mounting the mudguard. For example, said friction means 59 can comprise ribs, surface treatments, knurls, or in any case cantilevered portions adapted to perform a friction action.

According to a possible embodiment, the upper fixing wall 36 comprises anti-slip notches 76 which interface with said washer 72 in order to prevent the fixing pin 48 from sliding and falling hen fixed to the chassis of the associable vehicle.

It is also possible to provide (Figure 5) a single end-stroke notch 78 at said upper fixing wall 36, which acts as an end stroke in the axial adjustment of the position of the adjustable fixing device 20 along said transverse direction T-T.

Obviously, it is possible to use the end-stroke notch 78 only, but the co-presence with said anti-slip notches 76 can also be provided.

According to a possible embodiment, on the opposite side of the upper fixing wall 36, the base 24 comprises at least one undercut 80 acting as an end stroke for the fixing pin 48, along a vertical direction Y-Y parallel to an extension axis of the fixing pin 48.

According to a possible embodiment, said at least one undercut 80 is a shelf parallel to said slot 44. Preferably, two mutually symmetrical shelves are provided, arranged on opposite sides of slot the 44.

According to a possible embodiment, said pairs of adjustable fixing devices 20 are mutually equal and are oppositely fixed to the mudguard 4 oppo, so as to have a mirroring end stroke, facing said centreline plane M-M of the mudguard body 8: this configuration avoids the escape and increases the resistance to stress when the vehicle is travelling.

According to a possible embodiment, the base 24 comprises a pair of fixing plates 84 for fixing to the mudguard body 8, arranged symmetrically with respect to slot 44, at the interface wall 28, and each provided with a hole 88 for fixing to the mudguard body by means of a screw, pin or rivet 96.

Preferably, said screw, pin or rivet is fixed on the mudguard body 8 on the side of an inner side wall 92, opposite to said outer side wall 32 and facing the associable vehicle wheel.

The rigidity of the adjustable fixing device 20 is the result of an organic and compact shape encompassing nuts and screws to be tightened to the mudguard 4 in the structure thereof.

Finally, the small dimensions facilitate stacking during storage and transport.

As can be appreciated from the above description, the present invention allows overcoming the drawbacks introduced in the prior art.

In particular, the present invention is affordable to make and assemble, as well as reliable over time since no loosening, detachments and/or losses of pins or fixings over prolonged use occur.

Finally, unlike known solutions which are not very flexible and therefore require *ad hoc* embodiments for the various sizes of mudguard or types of brackets of the vehicle, the present invention allows making a single size of support to be associated with different mudguards and connection brackets.

Moreover, there is no risk of loosening of the fixings to the chassis and/or mudguard due to, for example, the vibrations transmitted to the mudguard and the chassis when the vehicle is travelling, as instead occurs in the solutions of the prior art.

Finally, the solutions of the present invention are affordable to make and assemble and on the other hand are easy to mount.

In order to meet contingent, specific needs, those skilled in the art may make several changes and variations to the solutions described above.

The scope of protection of the invention is defined by the following claims.

### List of reference signs

- 4:: mudguard
- 8:: mudguard body
- 12:: front end
- 16:: rear end
- 20:: adjustable fixing devices
- 24:: base
- 28:: interface wall
- 32:: outer side wall
- 36:: upper fixing wall
- 40:: front recess
- 44:: slot
- 48:: fixing pin
- 52:: stem
- 54:: square washer
- 55:: blind seat
- 56:: square under-head
- 57:: inner abutment
- 59:: friction means
- 60:: housing
- 64:: head
- 68:: nut
- 72:: washer
- 76:: anti-slip notches
- 78:: end-stroke notch
- 80:: undercut
- 84:: fixing plates
- 88:: hole
- 92:: inner side wall
- 96:: screw, pin or rivet
- M-M:: centreline plane
- T-T:: transverse direction
- Y-Y:: vertical direction

## Claims

1. A mudguard (4) for vehicles (12), comprising
- a mudguard body (8) having an arc-of-a-circle extension from a front end (12) to a rear end (16) with respect to a centreline plane (M-M) passing through the rotation axis of an associable vehicle wheel,
- at least a pair of adjustable fixing devices (20), arranged on opposite sides of said centreline plane (M-M), each adjustable fixing device (20) having a base (24) provided with an interface wall (28) intended to abut against an outer side wall (32) of the mudguard body (8), opposite to said associable wheel, and an upper fixing wall (36), opposite to the interface wall (28) and intended to be fixed to a support bracket of the associable vehicle,
- wherein a front recess (40) aligned with a slot (44) passing through the upper fixing wall (36) is provided at the upper fixing wall (36), said slot (44) housing a pin (48) for fixing the base (24) to the chassis,
- said fixing pin (48) comprising a stem (52) integral with a square washer (54) sliding inside a housing (60) placed below said slot (44) and comprising a head (64), arranged on the opposite side of the stem (52) with respect to the square washer (54).

2. A mudguard (4) according to claim 1, wherein said stem (52) is in one piece with the square washer (54).

3. A mudguard (4) according to claim 1 or 2, wherein the head (64) of the stem (52) of the fixing pin (48) is bulged and has a square under-head (56) which engages in said square washer (54), which in turn slides inside said housing (60) placed below the slot (44).

4. A mudguard (4) according to claim 1, wherein said stem (52) is rotationally integral with the square washer (54) by means of shape coupling between a blind seat (55) of the square washer (54) and the head (64) of the fixing pin (48).

5. A mudguard (4) according to claim 4, wherein said blind seat (55) is delimited by an inner abutment (57) and wherein the head (64) is flush with the square washer (54) .

6. A mudguard (4) according to claim 4 or 5, wherein said square washer (54) has, on an outer side wall, friction means (59) adapted to interface with said housing (60).

7. A mudguard (4) according to any one of claims 1 to 6, wherein said front recess (40) intercepts said housing (60) and is sized so as to allow the passage of the head (64) and/or the square washer (54) of the fixing pin (48), and wherein the housing (60) is counter-shaped with respect to the square washer (54) so as to form a prismatic coupling with the latter allowing the axial guide or relative axial sliding between the slot (44) and the fixing pin (48).

8. A mudguard (4) according to any one of claims 1 to 7, wherein the stem (52) of the fixing pin (48) is fixed to the upper fixing wall (36) by means of a nut (68), arranged on the opposite side of the head (64), wherein a washer (72) is interposed between the nut (68) and the upper fixing wall (36).

9. A mudguard (4) according to any one of claims 1 to 8, wherein the upper fixing wall (36) comprises anti-slip notches (76) which interface with said washer (72).

10. A mudguard (4) according to any one of claims 1 to 9, wherein the upper fixing wall (36) comprises an end-stroke notch (78) which acts as an end stroke in the axial adjustment of the position of the adjustable fixing device (20) along a transverse direction (T-T), perpendicular to said centreline plane (M-M).

11. A mudguard (4) according to any one of claims 1 to 10, wherein on the opposite side of the upper fixing wall (36), the base (24) comprises at least one undercut (80) acting as an end stroke for the fixing pin (48), along a vertical direction (Y-Y) parallel to an extension axis of the fixing pin (48).

12. A mudguard (4) according to claim 11, wherein said at least one undercut (80) is a shelf parallel to said slot (44) .

13. A mudguard (4) according to any one of claims 1 to 12, wherein said pairs of adjustable fixing devices (20) are mutually equal and are oppositely fixed to the mudguard (4), so as to have a mirroring end stroke, facing said centreline plane (M-M) of the mudguard body (8) .

14. A mudguard (4) according to any one of claims 1 to 13, wherein the base (24) comprises a pair of fixing plates (84) for fixing to the mudguard body (8), arranged symmetrically with respect to the slot (44), at the interface wall (28), and each provided with a hole (88) for fixing to the mudguard body (8) by means of a screw, pin or rivet (96).

15. A mudguard (4) according to any one of claims 1 to 14, wherein in a configuration of mounting the adjustable fixing device (20) to the mudguard body (8), said slot (44) extends along a transverse direction (T-T), perpendicular to said centreline plane (M-M).
